# EUROPEAN PATENT APPLICATION

(11) **EP 3 709 209 A1**
(43) Date of publication of application: **16.09.2020**
(21) Application number: 19163165.4
(22) Date of filing: 15.03.2019
(51) Int. Cl.: G06K 9/00

(54) **DEVICE, SYSTEM, METHOD AND COMPUTER PROGRAM FOR ESTIMATING POSE OF A SUBJECT**

(71) Applicant: Koninklijke Philips N.V., 5656 AG Eindhoven (NL)
(72) Inventor: ZHANG, Lu, 5656 AE Eindhoven (NL); LYU, Boshen, 5656 AE Eindhoven (NL); VAN DER HEIDE, Esther Marjan, 5656 AE Eindhoven (NL); FALCK, Thomas Maria, 5656 AE Eindhoven (NL)
(74) Representative: de Haan, Poul Erik

(57) **Abstract**

The present invention relates to a device, system, method, and computer program for estimating pose of a subject. To enable reliable and quick estimation of pose of a subject, the device comprises a conversion unit (120) configured to convert a depth image (110) of a scene (50) including the subject (10) into a corresponding artificial color image (130) using a model that is pre-trained by depth images and corresponding color images of a training scene including a training subject, and an estimation unit (140) configured to use the artificial color image (130) to estimate pose of the subject (10).

## Description

### FIELD OF THE INVENTION

The present invention relates to a device, system, method, and computer program for estimating pose of a subject, such as a patient in a hospital or an elderly person in a nursing home.

### BACKGROUND OF THE INVENTION

Clinical supervision of patients plays an important role in acute care settings. Early detection of motoric alterations could help to trigger early treatment in order to prevent fast deterioration.

One possibility of clinical supervision is given by camera-based patient monitoring, which is considered to be in particular of great relevance in hospitals and other care settings in the future. The motions of patients can indicate that a patient is in a delirious state, suffers from sleep disturbance or many other types of diseases. For example, the delirious patients have some typical movements such as plucking at bedclothes (carphology) and crapping in the air (floccillation), which can be recorded by the camera-based patient monitoring techniques. One remaining challenge in clinical settings is, however, the occlusion of patients. Patients are typically lying in bed, where body parts are covered by blankets or occluded by medical devices. This makes it very difficult to model the pose of the patient and localization of body parts in the image is difficult to extract. Further, an automatic video monitoring system, which can recognize and capture such motion patterns in real time would help caregivers to detect these complications at an early stage.

Computer vision techniques are being used for motion analysis. With surveillance videos, one trend is to do action recognition based on global features, such as with neural networks. These approaches could identify whether the patient has a specific motion at a specific moment. Yet, this approach requires the pre-defined action to be known in advance, e.g., plucking at bedclothes being an indication for a delirious state of the monitored patient. It is difficult to adapt said model to other motion analysis without retraining because of lacking body parts locations.

Another trend, pose estimation, analyzes the locations of body parts from images. Most of the research in the field of pose estimation is currently performed on RGB images. Particularly in clinical settings it is important that the pose estimation algorithm is reliably working under different illuminate conditions, but RGB-based pose estimation at nighttime is extremely challenging. Another concern regarding RGB images is a privacy issue due to the color images that are recorded from patients enabling direct identification of the patients. Hence, it is of particular interest to provide a solution to overcome said obstacles.

US 9165199 B2 discloses a system, method and computer program product for estimating human body pose. According to one aspect, anatomical features are detected in a depth image of a human actor. The method detects a head, neck, and trunk (H-N-T) template in the depth image, and detects limbs in the depth image based on the H-N-T template. The anatomical features are detected based on the H-N-T template and the limbs. An estimated pose of a human model is estimated based on the detected features and kinematic constraints of the human model.

### SUMMARY OF THE INVENTION

It is an object of the present invention to provide a device, system, method, and computer program for reliably and quickly estimating pose of a subject, at the same time respecting privacy of the subject.

In a first aspect of the present invention a device for estimating pose of a subject is presented that comprises:
a conversion unit configured to convert a depth image of a scene including the subject into a corresponding artificial color image using a model that is pre-trained by depth images and corresponding color images of a training scene including a training subject; and
an estimation unit configured to use the artificial color image to estimate pose of the subject.

According to another embodiment a corresponding system is provided, which comprises:
an imaging unit configured to acquire a depth image of a scene including a subject; and
a device as disclosed herein for estimating pose of a subject based on the acquired depth image.

In yet further aspects of the present invention, there are provided a corresponding method, a computer program which comprises program code means for causing a computer to perform the steps of the method disclosed herein when said computer program is carried out on a computer, as well as a non-transitory computer-readable recording medium that stores therein a computer program product, which, when executed by a processor, causes the method disclosed herein to be performed.

Preferred embodiments of the invention are defined in the dependent claims. It shall be understood that the claimed method, system, computer program, and medium have similar and/or identical preferred embodiments as the claimed device, in particular as defined in the dependent claims and as disclosed herein.

The present invention is based on the idea to estimate pose of a subject as motion patterns of patients may be informative of symptoms which may indicate or reflect different types of diseases. In addition, some abnormal motions may mean that the patient is suffering from the pain of a specific ailment.

For this purpose, a depth image of the scene including a subject is converted into a corresponding artificial color image. It should be noted in this context that the color image may be a visual color image or an infrared image. By definition, the term 'color' does not solely refer to a characteristic of human visual perception in the following, but further includes infrared. Thus, the conversion unit is preferably configured to convert the depth image into a corresponding artificial infrared image or artificial visual color image as artificial color image.

Depth images contain the information of recording distances from the viewpoint of the imaging unit (e.g. a camera) and are not affected by visual illumination changes. This is of particular interest in clinical settings, where the ambient light can constantly change. Depth images further allow hiding the identity information of the subject because no other information than depth is captured (like color or texture) and, thus, privacy of the subject is increased since it is more difficult to identify a patient from a depth image captured by a time of flight camera than from a color image. Thus, single time of flight camera-based pose estimation for patients lying in bed is one of the applications of the present invention.

On the other hand, depth images cannot capture color changes. As a result, any two regions with the same distance to a camera acquiring the depth image share the same pixel value. This is a challenging problem in clinical settings, where the patient, e.g., puts his/her hand on a soft bed. Then, the contour is difficult to be visualized in depth images. Hence, pose estimation on depth images is challenging, especially in the clinical case. This is one of the advantages of color images as in color images the contrast can be very helpful for localizing body parts.

This problem is overcome by the present invention by converting a depth image of a scene including a subject into a corresponding artificial color image. The converted artificial color image provides richer edge information and enables to amplify edge contrast. For this purpose, the artificial color image is used to estimate pose of the subject. Thus, according to the present invention a pose estimation model trained on RGB images may be adapted to depth images by transfer learning. At the same time, the edges in a depth image may be enhanced to provide stronger features for the pose estimation model.

The training scene including a training subject is preferably the same as the scene including the subject of which the depth image is converted into an artificial color image. However, the training scene including the training subject may also be a different scene including a different subject in comparison to the subject and the scene recorded in the depth image to be converted. In that case, the training scene is preferably a comparable setting as the setting recorded in the scene of the depth image. It may be a viable option to convert, e.g., a depth image of a patient lying in bed into a corresponding artificial color image, whereas the model used for conversion is pre-trained by depth images and corresponding color images of different patients/subjects lying in bed. Furthermore, the depth images used for conversion as well as the depth images and corresponding color images used for pre-training the model preferably only contain one subject/patient. If the model is pre-trained by color images, it performs the detection mainly based on the cues of edge information. Fine tuning the pre-trained model with depth images can help to handle low-contrast edge features.

According to another embodiment the conversion unit is configured to convert the depth image into the artificial color image by use of a neural network model. The neural network model learns to enhance the edge information of a depth image on pixel-wise level. The idea of said neural network is to take a (large) number of color and/or depth images as training examples and then develop a model that can learn from these training examples. The neural network uses the examples to automatically infer rules for recognizing body parts and edge information and thus enables to convert a depth image into an artificial color image with richer edge information. By increasing the number of training examples, i.e., the number of images of a training scene including a training subject, the neural network can learn more and improve its accuracy. Preferably, the neural network is a convolutional neural network (CNN) or a deep neural network, which is typically harder to train than a shallow neural network but well-suited for image recognition.

According to an embodiment the conversion unit is configured to convert the depth image into the artificial color image by use of any one of U-net, SegNet, auto-encoder or DeconvNet. It has been found that especially U-net, which is based on a fully convolutional network, shows a good performance in converting a depth image into a corresponding artificial color image. A detailed explanation of U-net can be found in O. Ronneberger et al.: U-net: Convolutional Networks for Biomedical Image Segmentation, arXiv: 1505.04597v1 (2015), which explanation is herein incorporated by reference.

According to another embodiment the estimation unit is configured to use a pose estimation model to estimate pose of the subject. This further eases the pose estimation and may further improve the quality of the pose estimation.

According to another embodiment the estimation unit is configured to use a pose estimation model that is pre-trained by color images of a testing scene including a testing subject. Preferably, said color images of a testing scene including a testing subject are the same as the color images of a scene including the subject whose corresponding depth images are converted into an artificial color image by the conversion unit. Hence, it may be a viable option to use color images of a testing scene to pre-train the pose estimation model, wherein the testing scene is the same as the training scene. Alternatively, color images of a different scene including a different subject may be used.

According to another embodiment the estimation unit is configured to use a pose estimation model that is further pre-trained by artificial color images and/or a combination of depth images and artificial color images. Preferably, the artificial color images are the converted images. The depth images used for pre-training the pose estimation model are preferably the images to be converted by the conversion unit. Alternatively, the artificial color images and depth images may be images of a different scene including a subject.

The pose estimation model may be any one of a Convolutional Pose Machine (CPM), DensePose or deepPose. In particular, CPM is favored, which uses a modular sequential design to implicitly learn long-range dependencies between image and multi-part cues for the task of body part detection. A detailed explanation of CPM can be found in S.-E. Wei et al.: Convolutional Pose machines, arXiv: 1602.00134v4 (2016), which explanation is herein incorporated by reference.

According to another embodiment the depth images of the scene including the subject are acquired by an imaging unit. Said imaging unit may further be configured to acquire color images of the scene. Thus, the imaging unit may comprise a time of flight camera, RGB camera, infrared camera, 3D camera or depth camera. Said camera acquires, e.g., an image of a patient lying in bed. Hence, the camera may preferably be mounted to the ceiling or wall of a room and may be directed to the patient's bed, such that a top-down view, front view or side view is obtained.

### BRIEF DESCRIPTION OF THE DRAWINGS

These and other aspects of the invention will be apparent from and elucidated with reference to the embodiment(s) described hereinafter. In the following drawings
Fig. 1 shows a schematic diagram of a system according to the present invention;
Fig. 2 shows examples of color images and depth images of a scene including a subject lying in bed;
Fig. 3 shows three examples of different depth images with different background scenes of a subject;
Fig. 4 shows a schematic diagram of a first embodiment of a device according to the present invention;
Fig. 5 shows a schematic diagram of a second embodiment of a device according to the present invention;
Fig. 6 shows the architecture of a U-net model;
Fig. 7 shows the architecture of a convolutional pose machine with two or more stages; and
Fig. 8 shows the architecture of a convolutional pose machine with six stages.

### DETAILED DESCRIPTION OF EMBODIMENTS

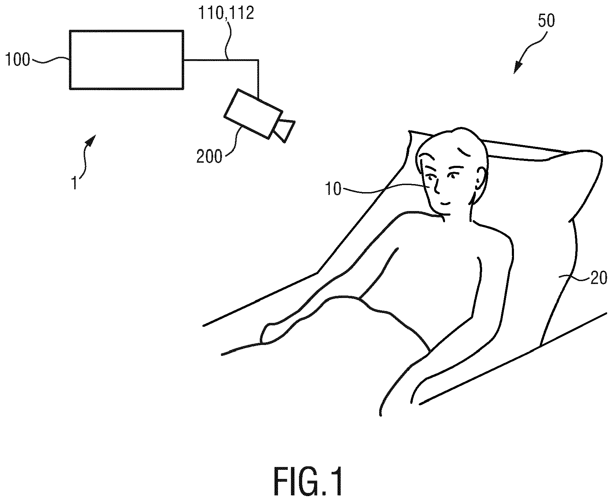

Fig. 1 shows a schematic diagram of an embodiment of a system 1 according to the present invention. The system 1 comprises an imaging unit 200 to acquire a depth image 110 of a scene 50 including a subject 10 lying in bed 20 and a device for estimating pose of the subject 10 based on the acquired depth image. Additionally (but not mandatorily), the imaging unit 200 may be further configured to acquire a color image 112 of the scene 50. The system 1 may be preferably used in clinical settings or other types of care units, but can be applied to any type of camera-based monitoring applications.

The device 100 may generally be implemented in hard- and/or software. For instance, the device 100 may be a computer, processor or workstation that is programmed accordingly.

The imaging unit 200 may in general be any imaging unit that provides depth information (i.e., a depth image 110) of the scene 50. For instance, the imaging unit 200 may be a time-of-flight (TOF) camera or a depth camera or a 3D camera. It is preferably mounted at the ceiling of the room directly above the subject 10 to acquire top-down views of the scene 50. In such a depth image, the pixel value indicates the absolute distance between an object and the camera. For instance, the range of the pixel value may be between 0 and 2800 in an exemplary implementation because the farthest object (the floor; not shown in Fig. 1) is around 2.8 meters away from the imaging unit 200, and the bed 20 is approximately 1.8 meters away from the imaging unit 200 considering the height of the bed 20.

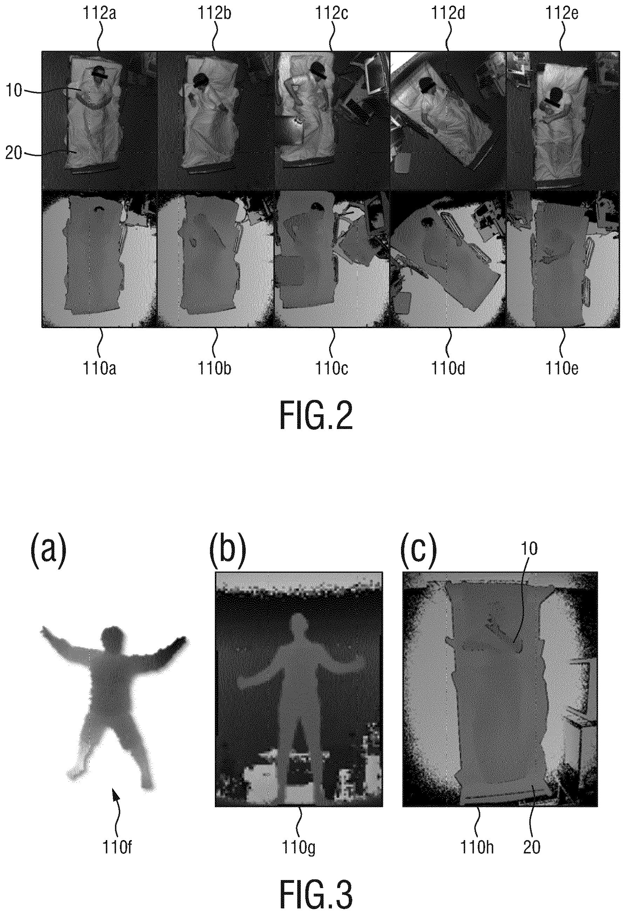

Fig. 2 shows examples of color images 112a-112e and corresponding depth images 110a-110e of the scene 50 including a subject 10 lying in bed 20. The depth images 110a-110e contain the information of recording distances from a viewpoint. Any two regions with the same distance to an illumination unit 200 share the same pixel value.

It is clearly shown that the edge/contour information of body parts of the subject 10 is weak due to the low depth contrast between the body of the subject 10 and bed 20. Especially the body parts covered by a blanket depict a bottleneck for pose estimation of a depth image 110 as the contour/edge information is extremely low in that region.

The contrast in the depth images 110a-110e shown in Fig. 2 is low because the subject 10 is lying in a soft bed 20 and is covered by a blanket. Other examples of different depth images with different background scenes of a subject are shown in Fig. 3.

Fig. 3 part (a) shows a depth image 110f of a subject where the background is subtracted. Fig. 3 part (b) shows a depth image 110g where the background is far away from the subject's body. Fig. 3 part (c) shows a depth image 110h of the scene 50 with a subject 10 lying in bed 20. The subject 10 lying in bed makes body contour of the subject 10 quite weak.

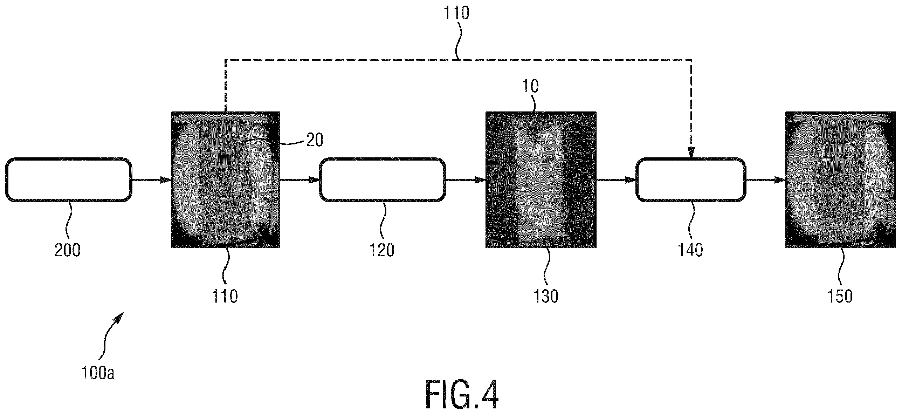

It is an object of the present invention to overcome said problem of weak body contour, e.g., in clinical settings. Fig. 4 shows a schematic diagram of a first embodiment of a device 100a according to the present invention, which overcomes this problem.

The device 100a comprises a conversion unit 120 that obtains a depth image 110 of the scene 50, which has been acquired by the imaging unit 200. The conversion unit 120 converts the depth image 110 into a corresponding artificial color image 130 (e.g., an artificial IR image that is pre-trained by depth images and corresponding color images of a training scene including a training subject. The model is preferably a neural network model, such as a U-net model, which will be explained). This is achieved by using a model below in more detail. Training with pairs of depth images and corresponding color images enables to obtain the conversion relationship between depth image and color image on pixel level, i.e., to convert the pixel value in the depth image into the pixel value in the color image.

The device 100a further comprises an estimation unit 140 that uses the artificial color image 130 to estimate pose of the subject 10. This is achieved by using a pose estimation model, which will be explained below in more detail. The model is trying to detect characteristic features (e.g., characteristic points, body parts, joints, etc.) of a person, like top/bottom of head, shoulders, elbows, wrists, torso, etc. Considering the spatial relationship among these characteristic features the final estimation may be output on locations of these characteristic features. In an embodiment the estimation unit 140 may additionally be provided with the depth image 110 in order to fine tune the estimation.

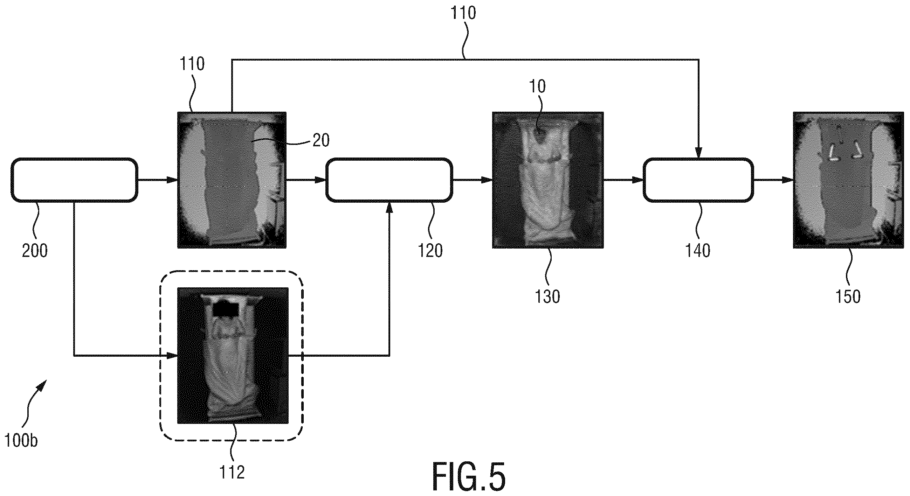

Fig. 5 shows a schematic diagram of a second embodiment of a device 100b according to the present invention. While the embodiment of the device 100a shown in Fig. 4 is mainly intended for the desired use of pose estimation, the device 100b shown in Fig. 5 can additionally be used in a training phase. In this embodiment the imaging unit 200 may further be configured to acquire a color image 112 of the scene 50. Alternatively, an additional imaging unit (not shown; e.g., an RGB camera or an infrared camera) may be provided to acquire a color image 112. The color image 112 is provided as additional input to the conversion unit 120 in the training phase. By definition, the color image 112 may be a visual color image or an infrared image.

The training scene including a training subject used in a training phase may be the same as the scene 50 including the subject 10. It is, however, also possible that the training scene includes a different training subject and/or that the training scene is a different scene. In that case, the training scene 60 is preferably a comparable setting as the setting recorded in the scene 50 of the depth image. It may be a viable option to convert, e.g., a depth image 110 of a subject 10 lying in bed 20 into a corresponding artificial color image 130, whereas the model used for conversion is pre-trained by depth images and corresponding color images of different patients/subjects.

The estimation unit 140 is preferably configured to use a pose estimation model that is pre-trained by color images of a testing scene including a testing subject. Again the testing scene and the testing subject may be the same or different from the scene 50 including the subject 10.

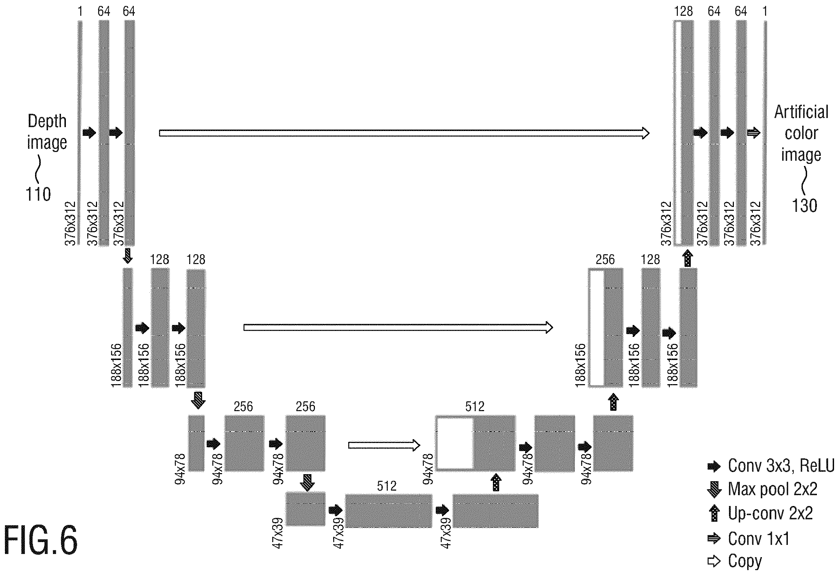

Fig. 6 shows the architecture of a U-net model that may be used by the conversion unit 120 to convert the depth image 110 of a scene 50 including the subject 10 into a corresponding artificial color image 130. The model may generate an artificial IR image based on input of a depth image, which could enhance weak edges (e.g., arms or shoulders) in the depth image. In an embodiment a standard U-net may be tailored into a simpler architecture to model the corresponding color image. The advantage of U-net is that it keeps the feature from both the global and the local area. The color image is considered as ground true, the loss function is set as computing sum of pixel wise mean squared error of IR and artificial color images.

The network of the U-net shown in Fig. 6 is a symmetric architecture, which includes three layers of down sampling and three layers of upsampling. Also, each layer of the downsampling is concatenated with the same size layer from upsampling. Each grey box corresponds to a multi-channel feature map. The number of channels is denoted on top of the box, respectively. The x-y-size is provided at the lower left edge of the box. The white boxes represent feature maps. The arrows denote different operations.

U-net has a symmetric decoder path after the encoder path for upsampling. The upsampling part of the decoder path has a large number of feature channels, which allow the network to propagate context information to higher resolution layers.

An encoder part is located on the left side (schematically denoted by 'Depth image 110') and a decoder part on the right side (schematically denoted by 'Artificial color image 130'). The encoder part is a typical VGG styled convolutional architecture. In each convolutional block, it consists of repeated two 3x3 convolutional layers without padding followed by a rectified linear unit (ReLU) and a 2x2 max pooling operation with stride 2 for downsampling. The beginning convolutional layer of each convolutional block doubles the number of feature channels. As for the right part, the decoder consists of multiple "up-convolutional blocks". Each block consists of a deconvolutional layer which not only upsamples the feature map to double the resolution but also halves the number of feature channels. This layer is followed by a concatenation with the correspondingly feature map from the encoder path, and two 3x3 convolutions, each followed by a ReLU unit. Finally, a 1x1 convolution is used to map each 64 component feature vector to the desired number of classes.

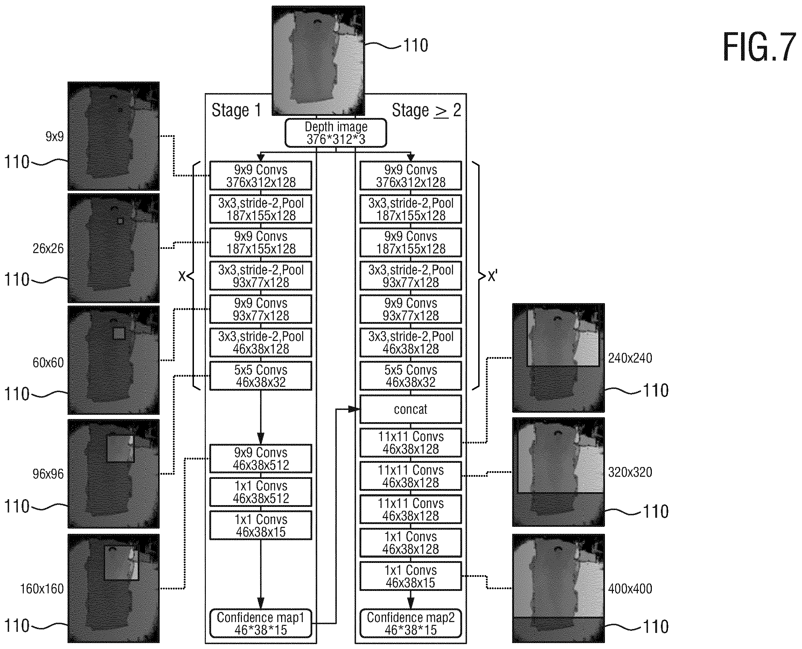

Fig. 7 shows the architecture of a convolutional pose machine (CPM) that may be used by the estimation unit 140 to estimate pose of the subject 10. In stage 1, the architecture operates only on an input image (i.e., depth image 110 of the scene 50 including the subject 10). Stage ≥ 2 shows the architecture for subsequent stages, which operate both on an input image as well as confidence maps from previous stages. The network has intermediate supervision after each stage using mean square error loss that prevents vanishing gradients during training. In the left and right part where depth images are connected with convolutional layers by dashed lines, Fig. 7 shows the effective receptive field on an image by a square (centered at the right shoulder of the subject), where the large receptive field enables the model to capture long-range spatial dependencies such as those between head and wrist. The number, n × n means the sized of the specific size of receptive field.

As further shown in Fig. 7, the confidence maps in the first stage are generated by observing the image with a small receptive field (here 160 × 160 pixels). The receptive field of the right shoulder cannot take into account information from a left elbow and a lower body. An enlarged receptive field in the second stage almost captures the whole body which makes that the network can successfully learn potential spatial dependencies among joints. Enlarging the receptive fields after the first stage can be achieved either by pooling at the expense of precision, increasing the kernel size of the convolutional filters at the expense of increasing the number of parameters, or by increasing the number of convolutional layers at the risk of encountering vanishing gradients during training.

As Fig. 7 shows, CPMs choose to use multiple convolutional layers to achieve large receptive field on the eight times downsampled confidence maps which keeps the number of parameters of the model at an acceptable level.

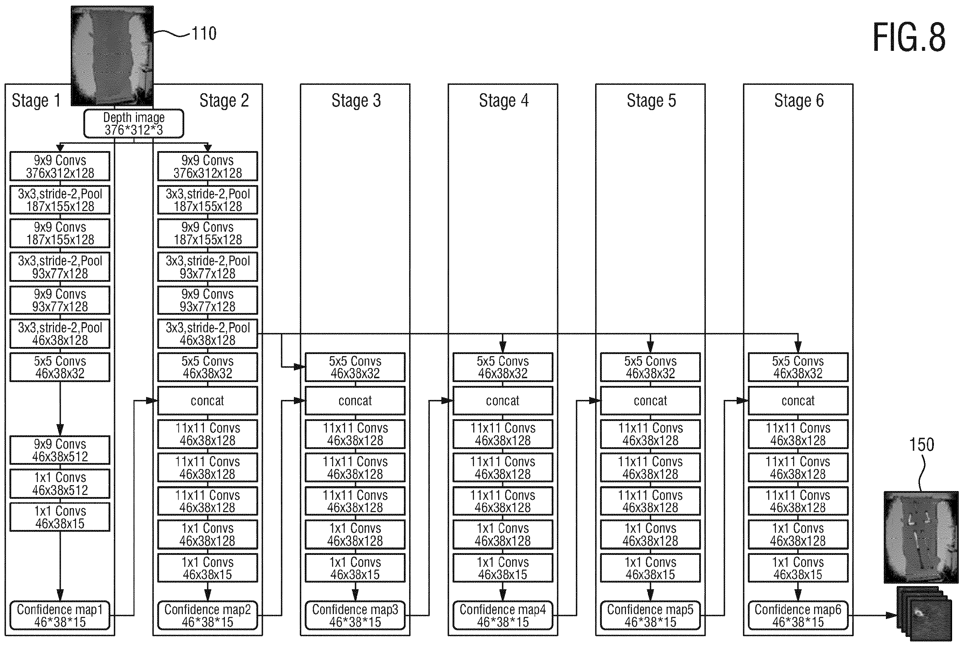

The number of steps in Fig. 7 is two, but in general variable. It has been observed that the performance of the CPM increases monotonically until 5 stages. The networks in subsequent stages utilize spatial information of the confidence maps of the previous stage to refine the output. A CPM with six stages is shown in Fig. 8. As shown in there a pose-enhanced depth image 150 of the scene 50 including the subject 10 is obtained in the end.

In summary, the present invention provides for efficient and reliable pose estimation, at the same time increasing privacy of the subject. The invention can be applied to any type of camera-based monitoring applications (such as but not limited to vital signs monitoring, delirium detection, video-actigraphy), particularly in different hospital settings (such as but not limited to ICUs, general wards, emergency rooms, waiting rooms).

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

A computer program may be stored/distributed on a suitable non-transitory medium, such as an optical storage medium or a solid-state medium supplied together with or as part of other hardware, but may also be distributed in other forms, such as via the Internet or other wired or wireless telecommunication systems.

Any reference signs in the claims should not be construed as limiting the scope.

## Claims

1. A device for estimating pose of a subject, said device comprising:
a conversion unit (120) configured to convert a depth image (110) of a scene (50) including the subject (10) into a corresponding artificial color image (130) using a model that is pre-trained by depth images and corresponding color images of a training scene including a training subject; and
an estimation unit (140) configured to use the artificial color image (130) to estimate pose of the subject (10).

2. Device (100) according to any one of the preceding claims,
wherein the conversion unit (120) is configured to convert the depth image (110) into a corresponding artificial infrared image or artificial visual color image as artificial color image (130).

3. Device (100) according to any one of the preceding claims,
wherein the conversion unit (120) is configured to convert the depth image (110) of a scene (50) that is the same as the training scene.

4. Device (100) according to any one of the preceding claims,
wherein the conversion unit (120) is configured to convert the depth image (110) into the artificial color image (130) by use of a neural network model.

5. Device according to any one of the preceding claims,
wherein the conversion unit (120) is configured to convert the depth image (110) into the artificial color image (130) by use of a convolutional neural network or deep neural network, in particular a U-net, SegNet, DeconvNet, or auto-encoder.

6. Device (100) according to any one of the preceding claims,
wherein the estimation unit (140) is configured to use a pose estimation model to estimate pose of the subject (10).

7. Device (100) according to claim 6,
wherein the estimation unit (140) is configured to use a pose estimation model that is pre-trained by color images of a testing scene including a testing subject.

8. Device (100) according to claim 7,
wherein the estimation unit (140) is configured to use a pose estimation model that is further pre-trained by artificial color images and/or a combination of depth images and artificial color images.

9. Device according to claim 6,
wherein the estimation unit (140) is configured to use as the pose estimation model any one of a Convolutional Pose Machine, DensePose or deepPose.

10. A system (1) for estimating pose of a subject (10), said system (1) comprising:
an imaging unit (200) configured to acquire a depth image (110) of a scene (50) including a subject (10); and
a device (100) for estimating pose of a subject (10) as claimed in any one of the preceding claims based on the acquired depth image (110).

11. System according to claim 10,
wherein the imaging unit (200) is further configured to acquire a color image (112) of the scene (50) including the subject (10).

12. System according to claim 10,
wherein the imaging unit (200) comprises a time of flight camera, RGB camera, infrared camera, a 3D camera or depth camera.

13. A method for estimating pose of a subject (10), said method comprising the steps of:
converting a depth image (110) of a scene (50) including the subject (10) into a corresponding artificial color image (130) using a model that is pre-trained depth images and corresponding color images of a training scene including a training subject; and
using the obtained artificial color image (130) to estimate pose of the subject (10).

14. Computer program comprising program code means for causing a computer to carry out the steps of the method as claimed in claim 13 when said computer program is carried out on the computer.
